(19) Europäisches Patentamt
European Patent Office
Office européen des brevets

(11) EP 0 598 213 B1

(12) EUROPÄISCHE PATENTSCHRIFT

(45) Veröffentlichungstag und Bekanntmachung des Hinweises auf die Patenterteilung:
**30.07.1997 Patentblatt 1997/31**

(51) Int Cl.[6]: **C08L 67/02**, C08K 5/29, G02B 1/04, G02B 6/44 // (C08L67/02, 69:00)

(21) Anmeldenummer: **93116314.1**

(22) Anmeldetag: **08.10.1993**

# (54) Umhüllungswerkstoff für Lichtwellenleiter auf Basis Polyalkylenterephthalat/Polycarbonat

Optical fibre sheath based on polyalkyleneterephthalate-polycarbonate blends

Gaine pour fibre optique à base d'un mélange de polytéréphtalate d'alkylène et de polycarbonate

(84) Benannte Vertragsstaaten:
**BE DE ES FR GB IT NL**

(30) Priorität: **21.10.1992 DE 4235463**

(43) Veröffentlichungstag der Anmeldung:
**25.05.1994 Patentblatt 1994/21**

(73) Patentinhaber:
- **BAYER AG
51368 Leverkusen (DE)**
- **SIEMENS AKTIENGESELLSCHAFT
80333 München (DE)**

(72) Erfinder:
- **Leimann, Gerhard, Dipl.-Ing.
D-42657 Solingen (DE)**
- **Paul, Friedemann Dipl.-Ing.
D-51469 Bergisch Gladbach (DE)**
- **Kamps, Rainer, Dr.
D-96271 Grub am Forst (DE)**
- **Lange, Gerhard, Dipl.-Chem.
D-81371 München (DE)**
- **Pfandl, Walter, Dr.
D-96482 Ahorn (DE)**

(74) Vertreter: **Klimiuk-Japadita, Meike
Bayer AG,
Konzernbereich RP
Patente und Lizenzen
51368 Leverkusen (DE)**

(56) Entgegenhaltungen:

| | |
|---|---|
| **WO-A-91/19760** | **CH-A- 621 135** |
| **FR-A- 2 268 838** | **FR-A- 2 325 061** |

- **PATENT ABSTRACTS OF JAPAN vol. 016, no. 485 (C-0993)8. Oktober 1992 & JP-A-04 175 366 (TORAY IND INC) 23. Juni 1992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 598 213 B1

Printed by Jouve, 75001 PARIS (FR)

## Beschreibung

Die vorliegende Erfindung betrifft mit Carbodiimiden stabilisierte Polyalkylenterephthalat/Polycarbonat Blends als Umhüllungswerkstoff für Lichtwellenleiter.

Die wesentliche Aufgabe der Lichtwellenleiter-Umhüllung besteht darin, die darin befindlichen Glasfasern gegen äußere Einflüsse zu schützen. Die Anforderungen an den Kunststoff, die Glasfasern vor Bruch, Biegung, Scherung, Torsion, Druck, Stauchung usw. zu schützen, um damit unzulässige Dämpfungserhöhung auszuschließen, sind hoch.

Die Anforderungen an Umhüllungsmaterialien für Lichtwellenleiter umfassen beispielsweise:

- Aufnahme axialer und radialer Kräfte, d.h. hohe mechanische Festigkeit bis zu Temperaturen von 80°C,
- Dimensionsstabilität, d.h. geringe Nachschwindung durch z.B. Nachkristallisation; keine Wechselwirkung, z.B. Masseaufnahme von Ader- und Seelen-Füllmassen; geringer Wärmeausdehnungskoeffizient,
- Chemikalienbeständigkeit,
- Spannungsrißbeständigkeit,
- Hydrolysebeständigkeit, z.B. Bestehen des Bell Core Testes,
- Knickfestigkeit,
- Niedriger Reibungskoeffizient.

Ein wesentliches Problem ist hierbei, die anorganische Glasfaser (Quarzglas) als isotropen, amorphen Werkstoff mit seinem äußerst kleinen linearen Temperaturausdehnungskoeffizienten mit einem organischen Thermoplast spannungsfrei zu umhüllen und im Einsatz zu schützen.

DE-OS 2 513 722 (US-A-4 330 173) beschreibt beispielsweise eine Umhüllung für Lichtwellenleiter, die aus 2 Schichten aufgebaut ist. Die innere Schicht besteht aus Polystyrol oder einem Fluorpolymer und deren äußere Schicht aus einem Polyamid, einem Polyterephthalat oder aus Polypropylen oder Polyäthylen.

DE-OS 2 419 968 beschreibt Polybutylenterephthalat-Formmassen, die u.a. auch Polycarbonat enthalten können, denen man zur Verbesserung der Wärmeabtrennungsbeständigkeit und Zähigkeit Carbodiimide zusetzt. JP 04-175366 beschreibt Formmassen aus Polybutylenterephthalat, Polycarbonat und Epoxyverbindungen und/oder Polycarbodiimiden zur Herstellung von Steckern. Lichtwellenleiterumhüllungen werden nicht erwähnt.

DE-OS 2 355 853 (US-A-3 887 265) beschreibt beispielsweise ein optisches Kabel, dessen Umhüllung aus Polyester besteht.

JP 59-6251 beschreibt Polyester-Mischungen, die Antimontrioxid, Erdalkalimetalloxide, Carbodiimide und Verstärkungsmittel enthalten.

Es gibt prinzipiell zwei konstruktive bzw. verfahrenstechnische Möglichkeiten der Fertigung einer losen Umhüllung.

1. Die Fertigung von Hohladerröhrchen auf Teller als echtes Zweischicht-System mit einer amorphen inneren Schicht wie z.B. Polyamid oder Polycarbonat und zum Schutz eine teilkristalline Außenschicht aus Polybutylenterephthalat. Nachteile dieses Systems sind die unbefriedigende Wirtschaftlichkeit und die enorme Spannungsrißanfälligkeit der amorphen Werkstoffe (DE-OS 25 13 722).

2. Die Fertigung von Hohladerröhrchen auf Spule als Zweischicht- oder Einschicht mit teilkristallinen Werkstoffen wie z.B. Polybutylenterephthalat, 12 Polyamid oder Copolymere des Polypropylens. Bei dieser Fertigung ist die störende Nachkristallisation durch das feste Aufwickeln auf die Spule weitgehend verhindert. Der Nachteil dieses Verfahrens liegt darin, daß die Fertigungslängen begrenzt sind.

Das heute in großem Maße für die Einschicht-Umhüllung eingesetzte Polybutylenterephthalat erfüllt die Anforderungen besonders in folgenden Punkten nicht vollständig: Dimensionsbeständigkeit, Hydrolysebeständigkeit und Temperaturbeständigkeit (Abfall der mechanischen Festigkeit bei der niedrigen Glasübergangstemperatur).

Die Aufgabe der vorliegenden Erfindung bestand darin, ein Polymerblend für Lichtwellenleiterumhüllungen zu entwickeln, das die positiven Eigenschaften von amorphen und teilkristallinen Produkten verbindet, ohne daß sich die negativen Eigenschaften bemerkbar machen und überdies eine gute Hydrolysestabilität aufweist.

Gegenstand der vorliegenden Erfindung sind Lichtwellenleiterumhüllungen aus

A) 75 bis 40 Gew.-Teile, vorzugsweise 70 bis 45, insbesondere 70 bis 50 Gew.-Teile Polyalkylenterephthalat,

B) 20 bis 55 Gew.-Teile, vorzugsweise 25 bis 50, insbesondere 30 bis 50 Gew.-Teile aromatisches Polycarbonat und

C) 0,1 bis 6 Gew.-Teile, vorzugsweise 0,2 bis 3, insbesondere 0,3 bis 1,5 Gew.-Teile Carbodiimid der Formel (I)

$$(X)_m\text{-[-N=C=N-Y-]}_p\text{-(N=C=N-X)}_m \qquad (I)$$

in der
X und Y aromatische oder araliphatische Kohlenwasserstoffreste mit 6 bis 20 C-Atomen bedeuten, die in mindestens einer Orthostellung zur Carbodiimidgruppe aromatische, aliphatische und/oder cycloaliphatische Substituenten mit mindestens 2 C-Atomen, bevorzugt verzweigte oder cyclische aliphatische Reste mit mindestens 3 C-Atomen tragen, und die Carbodiimidgruppe(n) an aromatischen Kohlenstoff gebunden ist (sind), p = 0 bis 50 (im Mittel) ist, und m 1 ist, wobei X noch freie Isocyanat-Gruppen enthalten kann, sowie gegebenenfalls übliche Additive,
wobei die Summe aus A + B + C 100 ergibt.

Das Blend weist eine ausgeprägte 2-Phasigkeit auf und ist thermisch so stabil, daß diese Struktur in der Lichtwellenleiter-Umhüllung erhalten bleibt. Die 2-Phasigkeit ist dadurch gekennzeichnet, daß

a) der Polycarbonat-Anteil das Verhalten des Schubmoduls noch deutlich in der Form mitbestimmt, daß neben der Polybutylentherephthalat- auch die Polycarbonat-Charakteristik erkennbar ist und

b) die Verschiebung bzw. Erniedrigung des Schmelzpunktes und Abnahme der Schmelzenthalpie durch die Verarbeitung vorzugsweise folgende Werte nicht überschreitet sollte:

- Schmelzenthalpie: 50 %

- Erniedrigung des Schmelzpunktes: 20°C

Außerdem treten bei dynamischen DSC-Messungen sowohl an Granulat als auch an Fertigteilen (Umhüllungen) während beider Aufheizungen und der dazwischenliegenden Abkühlung deutliche Schmelzpeaks bzw. ein ausgeprägter starrungspeak auf, die von der teilkristallinen alkylenterephthalatphase stammen.

Ferner wurde überraschend gefunden, daß Carbodiimide eine gute Stabilsiierung in den beschriebenen Blends aus Polyalylenterephthalat und Polycarbonat bewirken. Dies ist in sofern überraschend, als Carbodiimide zwar als Hydrolysestabilisatoren in Polyalkylenterephthalaten bekannt sind, jedoch ebenfalls bekannt ist, daß sie für den Einsatz als Hydrolysestabilisator in Polycarbonat nicht geeignet sind.

Für die Eignung von Polyalkylenterephthalat/Polycarbonat-Blends als Lichtwellenleitermaterial ist eine hohe Stabilisierung erforderlich, die erfindungsgemäß über Carbodiimide erzielt werden kann. Eine Stabilisierung des Polyesters durch eine reduzierte Carboxylzahl wie sie für den Einsatz von reinem PBT als Umhüllungsmaterial für Lichtwellenleiter bekannt ist, ist nicht ausreichend, zumal sich die Carboxylzahl durch die thermische Beanspruchung bei der Verarbeitung deutlich und nicht exakt kontrollierbar erhöht.

Polyalkylenterephthalate (Komponente A) im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte. Sie lassen sich nach bekannten Methoden herstellen (Kunststoff-Handbuch, Bd. VIII, S. 695 ff, Carl Hanser Verlag, München, 1973).

Bevorzugte Polyalkylenterephthalate enthalten mindestens 80, vorzugsweise mindestens 90 Mol-%, bezogen auf die Dicarbonsäurekomponente, Terephthalsäurereste und mindestens 80, vorzugsweise mindestens 90 Mol-%, bezogen auf die Diolkomponente, Ethylenglykol- und/oder Butandiol-1,4-reste.

Die bevorzugten Polyalkylenterephthalate können neben Terephthalsäureresten bis zu 20 Mol-% Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernstein-, Adipin-, Sebacin-, Azelain-, Cyclohexandiessigsäure.

Die bevorzugten Polyalkylenterephthalate können neben Ethylenglykol- bzw. Butandiol-1,4-resten bis zu 20 Mol-%, vorzugsweise bis zu 10 Mol-%, anderer aliphatischer Diole mit 3 bis 12 C-Atomen oder cycloaliphatischer Diole mit

6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3 und -1,6, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 24 07 647, 24 07 776, 27 15 932).

Die Polyalkylenterephthalate können durch Einbau relativ kleiner Mengen 3- oder 4-wertiger Alkohole oder 3-oder 4-basischer Carbonsäuren, wie sie z.B. in der DE-OS 19 00 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure oder deren reaktionsfähigen Derivaten (z.B. deren Dialkylestern) und Ethylenglykol und/oder Butandiol-1,4 hergestellt (Polyethylenterephthalat, Polybutylenterephthalat) worden sind, und Mischungen dieser Polyalkylenterephthalate.

Die als Komponente A vorzugsweise verwendeten Polyalkylenterephthalate besitzen im allgemeinen eine Intrinsic-Viskosität von 0,4 bis 1,6 dl/g, vorzugsweise 0,6 bis 1,5 dl/g, insbesondere 0,7 bis 1,4 dl/g, jeweils gemessen in Phenol/o-Dichlorbenzol (1:1 Gewichtsteile) bei 25°C.

Unter aromatischen Polycarbonaten (Komponente B) im Sinne dieser Erfindung werden Homopolycarbonate, Copolycarbonate und Mischungen dieser Polycarbonate verstanden.

Im allgemeinen entsprechen die für die Herstellung der aromatischen Polycarbonate A bevorzugten Diphenole der Formel

$$HO - Z - OH \qquad (I),$$

worin Z einen zweiwertigen ein- oder mehrkernigen aromatischen $C_6$-$C_{30}$-Rest bedeutet, wobei die beiden OH-Gruppen direkt an je ein C-Atom eines aromatischen Systems gebunden sind.

Besonders bevorzugte Diphenole entsprechen der Formel

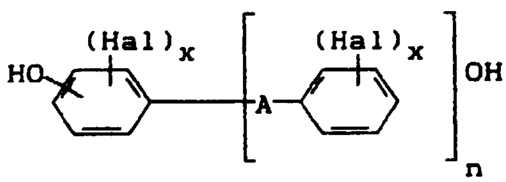

(II)

worin

A eine Einfachbindung, $C_1$-$C_5$-Alkylen, $C_2$-$C_5$-Alkyliden, $C_5$-$C_6$-Cycloalkylen oder -alkyliden, -O-, -S-,

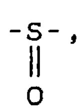, $-SO_2-$, 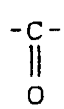 oder 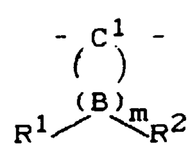

Hal Chlor oder Brom,

x Null, 1 oder 2 und

n Null oder 1 bedeuten,

$R^1$ und $R^2$ für jedes B individuell wählbar unabhängig voneinander Wasserstoff oder $C_1$-$C_6$-Alkyl, insbesondere Methyl,

B Kohlenstoff und

m eine ganze Zahl von 4 bis 7, bevorzugt 4 oder 5 bedeuten.

Als Diphenole seien insbesondere erwähnt:
2,2-Bis-(4-hydroxyphenyl)-propan,
1,1-Bis-(4-hydroxyphenyl) -cyclohexan,
2,2-Bis-(3,5-dichlor-4-hydroxyphenyl)-propan,
2,2-Bis-(3,5-dibrom-4-hydroxyphenyl)-propan,
2,2-Bis-(3,5-dimethyl-4-hydroxyphenyl)-propan,
Bis-(3,5-dimethyl-4-hydroxyphenyl)-methan,
Bis-(4-hydroxyphenyl)-sulfid,
1,1-Bis-(4-hydroxyphenyl)-3,3,5-trimethylcyclohexan.

Die Diphenole können sowohl einzeln als auch im Gemisch eingesetzt werden.

Besonders bevorzugte aromatische Polycarbonate sind Polycarbonate auf der Basis von 2,2-Bis-(4-hydroxyphenyl)-propan bzw. einem der anderen als bevorzugt genannten Diphenole. Ganz besonders bevorzugt sind solche auf Basis von 2,2-Bis-(4-hydroxyphenyl)-propan, 2,2-Bis-(3,5-dimethyl-4-hydroxyphenyl)-propan oder 1,1-Bis-(4-hydroxyphenyl)-3,3,5-trimethylcyclohexan oder Gemische aus 2,2-Bis-(4-hydroxyphenyl)-propan und 1,1-Bis-(4-hydroxyphenyl)-3,3,5-trimethylcyclohexan.

Die aromatischen Polycarbonate können durch den Einsatz geringer Mengen, vorzugsweise von 0,05 bis 2,0 Mol-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate besitzen in der Regel mittlere Molekulargewichte $\overline{M}_w$ von 10 000 bis 200 000, vorzugsweise von 20 000 bis 80 000, ermittelt durch Lichtstreuung.

Zur Einstellung des Molekulargewichts $M_w$ der Polycarbonate können in bekannter Weise Kettenabbrecher, wie beispielsweise Phenole, Halogenphenole oder Alkylphenole, in den berechneten Mengen eingesetzt werden.

Besonders bevorzugte Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenole bzw. Dialkylphenole mit insgesamt 8 bis 20 C-Atomen in den Alkylsubstituenten gemäß DE-OS 3 506 472, wie 3,5-Di-tert.-butylphenol, p-iso-Octylphenol, p-tert.-Octylphenol, p-Dodecylphenol, 2-(3,5-Dimethylheptyl)-phenol und 4-(3,5-Dimethyl-heptyl)phenol.

Die Menge an einzusetzenden Kettenabbrechern beträgt im allgemeinen zwischen 0,5 und 10 Mol-%, bezogen auf die Summe der jeweils eingesetzten Diphenole.

Die aromatischen Polycarbonate können nach bekannten Verfahren hergestellt werden, z.B. durch Schmelzumesterung eines entsprechenden Bisphenols mit Diphenylcarbonat und in Lösung aus Bisphenolen und Phosgen. Die Lösung kann homogen sein (Pyridinverfahren) oder heterogen (Zweiphasengrenzflächenverfahren) (vgl. H. Schnell, "Chemistry and Physics of Polycarbonates", Polymer Reviews, Vol. IX, S. 33 ff., Interscience Publ. 1964).

Komponente C

Bevorzugt sind Carbodiimide der Formel (I), deren aromatische Reste X und Y, beispielsweise Phenyl, in beiden Orthostellungen und gegebenenfalls in Parastellung zur Carbodiimidgruppe durch (cyclo-)aliphatische und/oder aromatische Reste, beispielsweise $C_1$-$C_6$-Alkyl oder Phenyl substituiert sind, wobei einer dieser orthoständigen Substituenten eine Methylgruppe sein kann. Besonders bevorzugt sind Verbindungen, deren aromatische Ringe X und Y in beiden Nachbarstellungen zur Carbodiimidgruppe durch (cyclo)aliphatische Reste substituiert sind, wobei einer dieser orthoständigen Substituenten eine Methylgruppe sein kann, der andere mindestens 2 C-Atome enthält.

Ganz besonders bevorzugt sind Carbodiimide, die in Orthostellung bzw. Ortho- und Parastellung zur Carbodiimidgruppe 2 bzw. 3 Substituenten tragen, von denen mindestens einer eine verzweigte aliphatische Kette mit mindestens 3 C-Atomen, oder ein Cycloaliphat mit 5 oder 6 C-Atomen ist. p ist vorzugsweise 0 bis 40.

Die Carbodiimide können als Dimere, oligomere oder polymere Verbindungen oder aus Gemischen daraus eingesetzt werden. Vorzugsweise werden polymere Carbodiimide ($P \geq 11$) eingesetzt.

Erfindungsgemäß geeignete zur Carbodiimidgruppe benachbarte Substituenten am aromatischen Ring sind $C_2$-$C_{20}$-Alkyl- und/oder Cycloalkylgruppen, wie Ethyl-, Propyl-, Isopropyl-, sek. Butyl-, tert.-Butyl, Cyclohexyl-, Dodecyl-, oder auch Aryl- und Aralkylreste mit 6 bis 15 C-Atomen, wie Phenyl-, Tolyl-, Benzyl-, Naphthylreste usw.

Besonders geeignet sind solche Carbodiimide, die in den Ortho-Stellungen zur Carbodiimidgruppe durch iso-Propyl substituiert sind, und die gegebenenfalls in der para-Stellung zur Carbodiimidgruppe ebenfalls durch iso-Propyl substituiert sind.

Beispielhaft seien die folgenden Carbodiimide genannt:

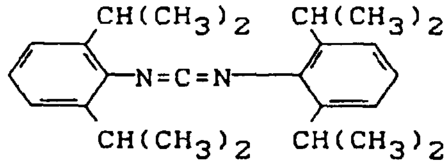

(1)

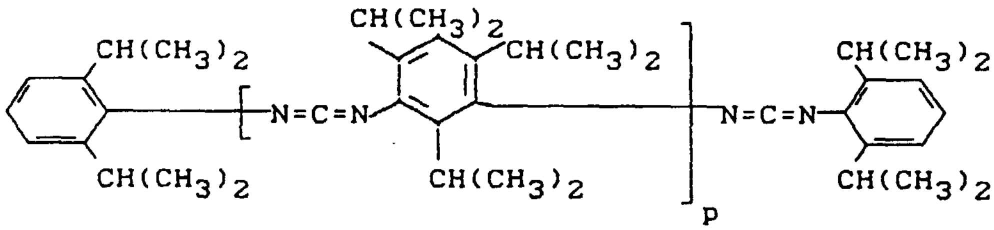

(2)

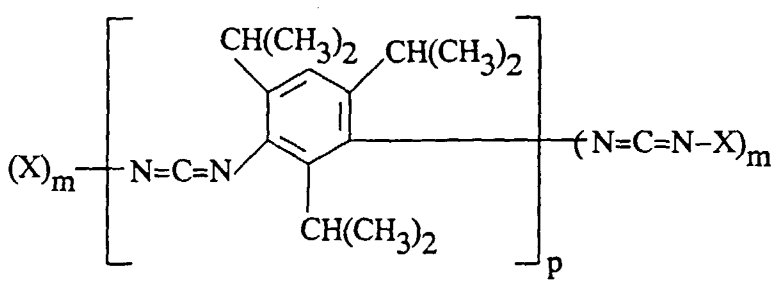

(3)

Die Carbodiimide der Formel (I) können nach an sich bekannten Verfahren hergestellt werden. Ein mögliches Herstellungsverfahren ist z.B. in der DAS 25 37 685 beschrieben. Nach der Lehre dieser Patentschrift werden organische Polyisocyanate in Gegenwart einer geeigneten Phosphorverbindung bis zum gewünschten Grad teilweise umgesetzt und der Katalysator anschließend mit einem geeigneten Halogenid, z.B. einem Säurehalogenid, aktiviert.

Polycarbodiimide können außerdem, wenn sie aus Isocyanaten hergestellt worden sind, noch reaktionsfähige NCO-Gruppen und komplex gebundene monomere Isocyanate enthalten. Polycarbodiimide lassen sich beispielsweise nach der französischen Patentschrift 1 180 307 aus Polyisocyanaten mit katalytischen Mengen an Phospholinen, Phospholidinen und deren Oxiden und Sulfiden herstellen. Weitere geeignete Polycarbodiimide lassen sich herstellen aus aromatischen Di- und Polyisocyanaten, die in o-Stellung zu allen NCO-Gruppen einen oder zwei Aryl-, Alkyl- bzw. Aralkylsubstituenten tragen, wobei wenigstens einer der Substituenten mindestens zwei Kohlenstoffatome aufweisen soll, unter Einwirkung von tertiären Aminen, basisch reagierenden Metallverbindungen, carbonsauren Metallsalzen und nicht basischen metallverbindungen. NCO-Gruppen-haltige Polycarbodiimide können in der Weise modifiziert werden, daß die noch vorhandenen Isocyanatgruppen mit reaktionsfähigen, Wasserstoff enthaltenden Verbindungen wie Alkoholen, Phenolen oder Aminen beseitigt werden (vgl. DE-AS 1 156 401 und DE-OS 2 419 968).

Die erfindungsgemäßen Polymerblends können übliche Additive, wie Gleit- und Entformungsmittel, Nukleiermittel, Antistatika, Stabilisatoren, Füll- und Verstärkungsmittel, Flammschutzmittel sowie Farbstoffe, Pigmente und Antioxidantien enthalten.

Die erfindungsgemäßen Polymerblends können durch Mischen der Komponenten bei erhöhter Temperatur, vorzugsweise im Bereich von 200 bis 330°C, hergestellt werden, also z.B. in üblichen Vorrichtungen wie Innenknetern, Extrudern, Doppelwellenschnecken oder Buss-Knetern, schmelzcompoundiert oder schmelzextrudiert werden. Die Komponenten können gleichzeitig oder nacheinander in das Mischgerät eingeführt werden. Zur Herstellung der Umhüllung des Lichtwellenleiters kann das beschriebene Polymerblend als a) homogenes Granulat, b) als mechanische Mischung von unstabilisiertem Polyalkylenterephthalat/PC-Blend mit Carbodiimid-Granulatkonzentraten, c) als mechanische Mischung von Polyalkylenterephthalat-, PC-Granulat und Carbodiimid-Granulatkonzentraten und d) als mechanische Mischung aller Einzelkomponenten sowohl in reiner Form als auch als Konzentrat eingesetzt werden.

Die Fertigung der Umhüllungen erfolgt nach den allgemein bekannten (Extrusions-)Verfahren.

Die Umhüllungen können jede beliebige (Geometrie) Querschnittsform aufweisen.

Beispiele

Eingesetzte Komponenten

A Polybutylenterephthalat (PBT)
Intrinsic Viskosität 1,4 dl/g,gemessen in Phenol/o-Dichlorbenzol (Gewichtsverhältnis 1:1) bei 25 °C

B Polycarbonat auf Basis Bisphenol A
Relative Lösungsviskosität (DIN 51 568, Teil 3): 1,335

C Stabaxol® KE 8457 (Rhein Chemie Rheinau GmbH) Polymeres Carbodiimid (Stabaxol P 100) in thermoplastischem Polymer auf Basis Polybutylenterephthalat (Intrinsic Viskosität 1,25)dl/g, gemessen in Phenol/o-Dichlorbenzol (Gewichtsverhältnis 1:1) bei 25 °C Wirkstoffgehalt: ca. 20 %

Das Mischen der Komponenten erfolgte auf einem Doppelwellenextruder ZSK 83, Bauart Werner und Pfleiderer.

Tabelle 1

| Zusammensetzung des Polymerblends | | | | |
|---|---|---|---|---|
| Beispiel | PBT | PC | Carbodiimid | Additive* |
| A | 54,4 | 45 | 0,5 | 0,1 |
| B | 54,15 | 45 | 0,75 | 0,1 |
| C | 53,9 | 45 | 1,0 | 0,1 |
| D (Vergleich) | 54,9 | 45 | - | 0,1 |
| E | 54,24 | 45 | 0,75 | 0,01 |
| F (Vergleich) | 59,99 | 40 | - | 0,01 |

*) übliche Additive

Tabelle 2

| Reißdehnung (in %) aus dem Zugversuch an Prüfkörpern F 3 x 0,7 (gespritzter 70%iger Proportionalstab) gemäß DIN 53455, Prüfgeschwindigkeit: 35 mm/min. | | | |
|---|---|---|---|
| Beispiel | O-Wert | Nach 35 Tagen Wasserlagerung bei 80°C | Nach 35 Tagen Heißluftlagerung bei 130°C |
| A | 140 | 30 | 102 |
| B | 120 | 35 | 75 |
| C | 110 | 40 | 85 |
| D (Vergleich) | 70 | 2 | 5 |

Tabelle 3

| Reißdehnung (in %) gemäß DIN 53455, an extrudierten Prüfkörpern (Zugstäbe aus Bändchen gestanzt nach DIN 53504, Typ S 2); Prüfgeschwindigkeit: 25 mm/min. | | | |
|---|---|---|---|
| Beispiel | O-Wert | Nach 35 Tagen Wasserlagerung bei 80°C | Nach 35 Tagen Lager in Ader- und Seelenfüllmasse bei 80°C |
| E | 160 | 130 | 160 |
| F (Vergleich) | 130 | nicht meßbar | - |

Tabelle 4

| Reißdehnung (in %) an Lichtwellenleiter-Umhüllungen (Röhrchen); Prüfgeschwindigkeit: 50 mm/min. | | | |
|---|---|---|---|
| Beispiel | O-Wert | Nach 28 Tagen Wasserlagerung bei 80°C | Nach 28 Tagen Heißluftlagerung bei 100°C |
| E | 160 | 140 | 140 |

Aus den Tabellen ergibt sich, daß die erfindungsgemäßen Polymerblends ausgezeichnet die Anforderungen in Bezug auf Langzeitverhalten (Hydrolyse- und Heißluftalterung, Beständigkeit im Test bezüglich Lagerung in Ader- und Seelenfüllmasse) für den Einsatz als Umhüllungswerkstoff für Lichtwellenleiter erfüllen. Im Gegensatz dazu zeigen die unstabilisierten PBT/PC-Blends deutlich schlechteres Verhalten.

**Patentansprüche**

**1.** Lichtwellenleiter-Umhüllung aus

A) 75 bis 40 Gew.-Teile Polyalkylenterephthalat,
B) 20 bis 55 Gew.-Teile aromatischem Polycarbonat und
C) 0,1 bis 6 Gew.-Teile Carbodiimid der Formel (I)

$$(X)_m\text{-[-N=C=N-Y-]}_p\text{-(-N=C=N-X)}_m \qquad \text{(I)}$$

in der
X und Y aromatische oder araliphatische Kohlenwasserstoffreste mit 6 bis 20 C-Atomen bedeuten, die in mindestens einer Orthostellung zur Carbodiimidgruppe aromatische, aliphatische und/oder cycloaliphatische Substituenten mit mindestens 2 C-Atomen, bevorzugt verzweigte oder cyclische aliphatische Reste mit mindestens 3 C-Atomen tragen, und die Carbodiimidgruppe(n) an aromatischen Kohlenstoff gebunden ist (sind), p = 0 bis 50 (im Mittel) ist und m 1 ist, wobei X noch freie Isocyanatgruppen tragen kann, sowie gegebenenfalls übliche Additive wobei die Summe aus A+B+C 100 ergibt.

**2.** Lichtwellenleiter-Umhüllung gemäß Anspruch 1, worin

A) 70 bis 45 Gew.-Teile Polyalkylenterephthalat,
B) 25 bis 50 Gew.-Teile aromatische Polycarbonat und
C) 0,2 bis 3 Gew.-% Teile Carbodiimid.

**3.** Lichtwellenleiter-Umhüllung gemäß Anspruch 1, wobei folgende Carbodiimide allein oder im Gemisch verwendet werden:

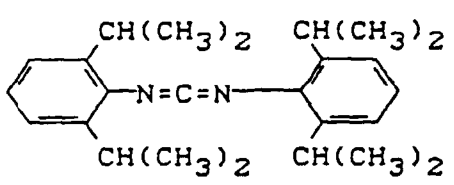

(1)

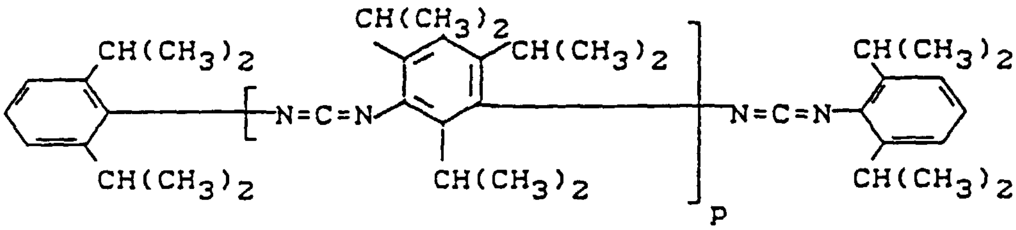

(2)

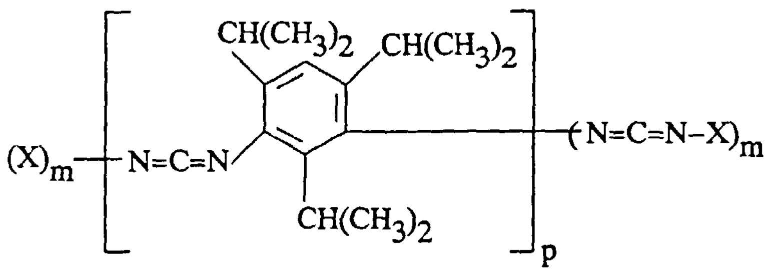

(3)

4. Verwendung von Polymerblends gemäß Anspruch 1 zur Herstellung von Lichtwellenleiter-Umhüllungen.

5. Lichtwellenleiter-Umhüllung gemäß Anspruch 1, enthaltend Additive ausgewählt aus Gleit- und Entformungsmittel, Nukleiermittel, Antistatika, Stabilisatoren, Füll- und Verstärkungsstoffe, Flammschutzmittel sowie Farbstoffe, Pigmente und Antioxidantien.

6. Verfahren zur Herstellung von Lichtwellenleiterumhüllungen, dadurch gekennzeichnet, daß die Komponenten gemäß Anspruch 1 bei Temperaturen im Bereich von 200 bis 330°C gemischt werden, schmelzcompoundiert und schmelzextrudiert werden.

**Claims**

1. Optical fibre coating prepared from

A) 75 to 40 parts by weight of polyalkylene terephthalate,
B) 20 to 55 parts by weight of aromatic polycarbonate and
C) 0.1 to 6 parts by weight of carbodiimide of the formula (I)

$$(X)_m\text{-[-N=C=N-Y-]}_p\text{- (-N=C=N-X)}_m \qquad (I)$$

in which
X and Y mean aromatic or araliphatic hydrocarbon residues having 6 to 20 C atoms, which bear in at least one ortho position relative to the carbodiimide group aromatic, aliphatic and/or cycloaliphatic substituents having at least 2 C atoms, preferably branched or cyclic aliphatic residues having at least 3 C atoms, and the carbodiimide group(s) is (are) attached to aromatic carbon, p is 0 to 50 (on average) and m is 1, wherein X may still bear free isocyanate groups, optionally together with conventional additives, wherein the sum of A + B + C is 100.

2. Optical fibre coating according to claim 1, in which

A) 70 to 45 parts by weight of polyalkylene terephthalate,

B) 25 to 50 parts by weight of aromatic polycarbonate and
C) 0.2 to 3 parts by weight of carbodiimide.

**3.** Optical fibre coating according to claim 1, wherein the following carbodiimides are used alone or as a mixture:

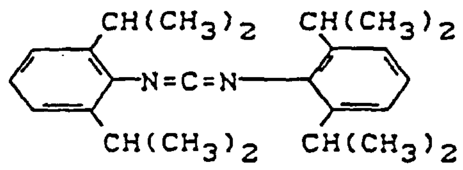

(1)

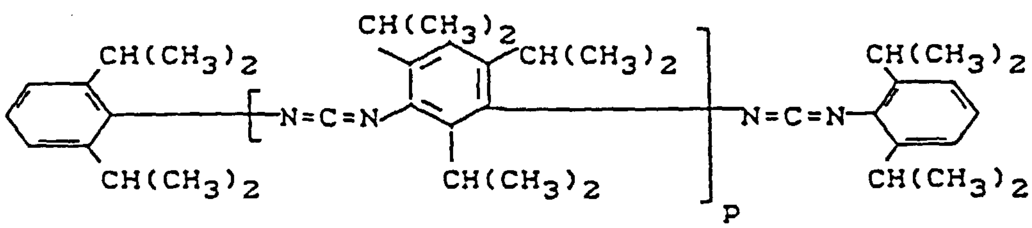

(2)

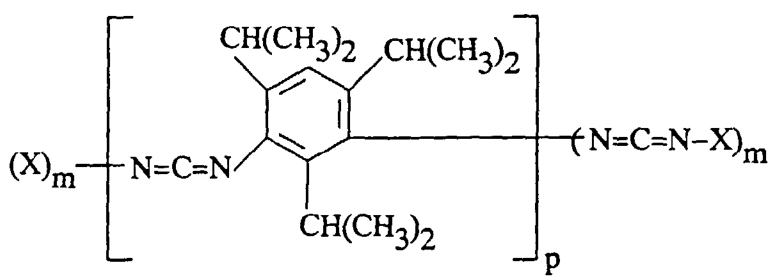

(3)

**4.** Use of polymer blends according to claim 1 for the production of optical fibre coatings.

**5.** Optical fibre coating according to claim 1 containing additives selected from lubricants and mould release agents, nucleating agents, antistatic agents, stabilisers, fillers and reinforcing materials, flame retardants together with dyes, pigments and antioxidants.

**6.** Process for the production of optical fibre coatings, characterised in that the components according to claim 1 are mixed at temperatures in the range from 200 to 330°C, are melt-compounded and melt-extruded.

**Revendications**

**1.** Enrobage de guides d'ondes lumineuses constitué par

A) 75 à 40 parties en masse de polyalkylènetéréphtalate,
B) 20 à 55 parties en masse de polycarbonate aromatique et
C) 0,1 à 6 parties en masse de carbodiimide de formule (I):

$$(X)_m\text{-[-N=C=N-Y-]}_p\text{-(N=C=N-X)}_m \qquad \text{(I)}$$

dans laquelle
X et Y représentent des restes hydrocarbonés aromatiques ou arylaliphatiques ayant 6 à 20 atomes de carbone, qui portent dans au moins une position ortho par rapport au groupe carbodiimide des substituants aromatiques, aliphatiques et/ou cycloaliphatiques ayant au moins 2 atomes de carbone, de préférence des restes aliphatiques ramifiés ou cycliques ayant au moins 3 atomes de carbone, et le ou les groupes carbodiimide est ou sont lié(s) à du carbone aromatique, p = 0 à 50 (en moyenne), et m est égal à 1, X pouvant porter encore des groupes isocyanates libres, et éventuellement des additifs courants, la somme A + B + C étant égale à 100.

**2.** Enrobage de guides d'ondes lumineuses selon la revendication 1 avec

A) 70 à 45 parties en masse de polyalkylènetéréphtalate,
B) 25 à 50 parties en masse de polycarbonate aromatique et
C) 0,2 à 3 parties en masse de carbodiimide.

**3.** Enrobage de guides d'ondes lumineuses selon la revendication 1, dans lequel les carbodiimides suivants sont utilisés seuls ou en mélange :

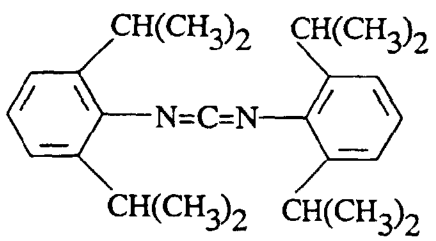

(1)

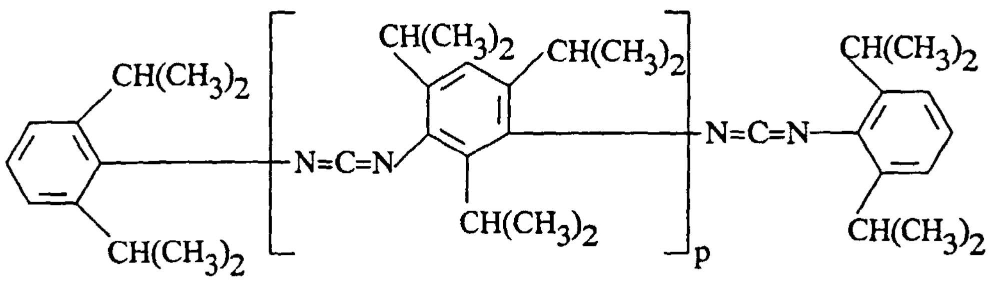

(2)

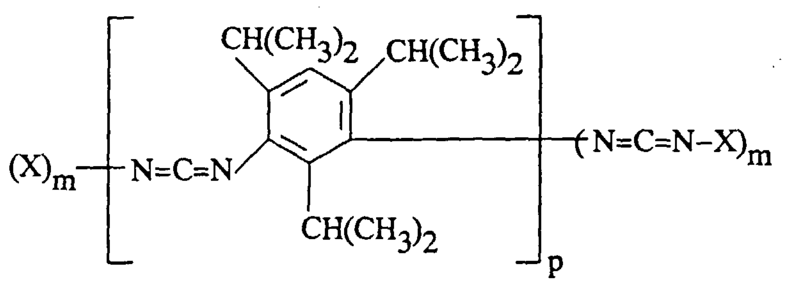

(3)

**4.** Utilisation de mélanges de polymères selon la revendication pour la fabrication d'enrobages de guides d'ondes lumineuses.

**5.** Enrobage de guides d'ondes lumineuses selon la revendication 1 contenant des additifs choisis parmi les agents lubrifiants et de démoulage, les agents de nucléation, les antistatiques, les stabilisants, les charges et les agents de renforcement, les agents ignifugeants, ainsi que les colorants, les pigments et les antioxydants.

**6.** Procédé de fabrication d'enrobages de guides d'ondes lumineuses, caractérisé en ce que les constituants selon la revendication 1 sont mélangés, combinés à l'état fondu et extrudés à l'état fondu à des températures situées

dans le domaine de 200 à 330°C.